# EUROPEAN PATENT SPECIFICATION

(11) **EP 3 199 412 B1**
(45) Date of publication and mention of the grant of the patent: **27.03.2019**
(21) Application number: 16305087.5
(22) Date of filing: 29.01.2016
(51) Int. Cl.: B60R 25/023, B60R 25/20

(54) **BRACKET FOR A VEHICLE ANTITHEFT DEVICE**
HALTERUNG FÜR EINE FAHRZEUGDIEBSTAHLSICHERUNGSVORRICHTUNG
SUPPORT POUR UN DISPOSITIF ANTIVOL POUR VÉHICULE

(43) Date of publication of application: 02.08.2017
(73) Proprietor: U-Shin France, 94000 Créteil (FR)
(72) Inventor: PASTOR, Julieta, 94000 Creteil (FR); DEVERNOIS, Thomas, 94000 Creteil (FR)
(74) Representative: Gaillarde, Frédéric F. Ch.

(56) References cited:
- EP-A1- 1 127 758
- EP-A1- 1 323 600
- EP-A1- 2 070 782
- WO-A1-2010/118988

## Description

The invention relates to a bracket for a vehicle antitheft device, notably an antitheft device for a steering column of the vehicle. It also relates to a vehicle antitheft device comprising such a bracket and to methods of assembling such a bracket and such an antitheft device.

These antitheft devices generally include a lock part cooperating with an ignition key as in EP 2 070 782 A1. The lock part comprises a rotor intended to receive the insert of the authorized key surrounded by a fixed stator. The rotor is able to rotate and make to rotate a camshaft cooperating with the lock bolt. The lock is enclosed in a bracket, which is then embedded in the vehicle.

The lock bolt is designed for blocking the movement of the steering column when the vehicle is parked, also called "locked position", and for unblocking the said movement when the vehicle is used by an authorized user, also called "unlocked position". Such antitheft devices therefore prevent car thefts. Generally, the unlocking of the antitheft device is done by turning the authorized key into the rotor.

Some steering column locks are able to turn inside the bracket in order to enable a declutching function to maintain their functional and structural integrity. Such lock, also called a declutchable lock, allows preventing from tearing the lock cylinder from its housing in the bracket.

Conventionally, the bracket is made of a single piece and comprises a complementary declutching mean configured to cooperate with a declutching mean of the lock. The bracket is classically made of plastic or "Zamak" (registered trademark).

Currently, only bracket made in "Zamak" (registered trademark) allow the declutching of the lock thanks to machined the complementary declutching mean, which cannot be done by die casting. Only such bracket is compatible with Thatcham specifications. However, this machining mandatory for a declutching function significantly increases the production costs of the bracket.

A bracket made in plastic is cheaper and lighter but is not compatible with Thatcham specifications, because it is not possible to machine the bracket to provide a complementary declutching means.

Therefore, there is a need for providing a bracket for antitheft device compatible with Thatcham specifications while reducing the production costs of the bracket.

Thus, one object of the present invention is to provide a bracket for an antitheft device of a vehicle steering column that does not present the drawbacks mentioned hereinabove.

To this end, the invention proposes a bracket for a vehicle antitheft device comprising at least a lock intended to be housed at least partially inside the bracket, the bracket comprising a housing configured for receiving an axial blocking element protruding radially according to a rotation axis of the lock from a circumferential face of the lock, the housing being configured for enabling the rotation of the axial blocking element according to the rotation axis and for retaining axially along the rotation axis the axial blocking element abuts against a wall of the housing, wherein the bracket is made up of at least a body and a sleeve configured to be received at least partially within the body such that the housing is arranged in an inner surface of the sleeve and wherein the sleeve (34) is cylindrical-shaped and the body (32) comprises:
- a cavity (36) opening at a cylindrical inner surface (40) of the body and configured for receiving at least a portion of an outer surface (42) of the sleeve; and
- a hole (38) configured so that the sleeve (34) is inserted inside the hole to the contact between the outer surface (42) of the sleeve and the bottom of the cavity (36).

Advantageously, the both parts can be made by die casting or injection without any other machining thus reducing the production costs of the bracket.

According to further embodiments:
- at least one of the body and the sleeve is made of pressure die cast plastics or injected plastics;
- the sleeve of the bracket is made of pressure injection plastics including high-strength fibers or "Zamak" (registered trademark);
- the housing is configured such that the lock is rotatable 360° around the rotation axis;
- the body and the sleeve are assembled using welding means, preferably welding means using laser beams, and/or using pining means and/or using crimping means and/or using riveting means;
- the body and the sleeve are assembled using snap-fastening means.

Embodiments of the invention will now be described, by way of example only, and with reference to the following drawings in which:
- Figure 1 represents an exploded view in perspective of main parts of an antitheft device according to the invention, the main parts comprise a lock and a bracket according to a preferred embodiment of the invention;
- Figures 2 and 3 represent a partial sectional view of the antitheft device of the figure 1, the lock being housed partially inside the bracket, figure 3 being an enlarged view of the cooperation of a part of the lock and the bracket;
- Figure 4 illustrates an exploded view of a body and a sleeve of the bracket of the figure 1;
- Figure 5 represents an enlarged view of the body illustrated on figure 4 where the sleeve is intended to be inserted,
- Figure 6 represents the same enlarged view as on figure 5, the sleeve being inserted in the body of the bracket,
- Figure 7 illustrates a schematic view in perspective of the sleeve of the bracket illustrated on figures.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

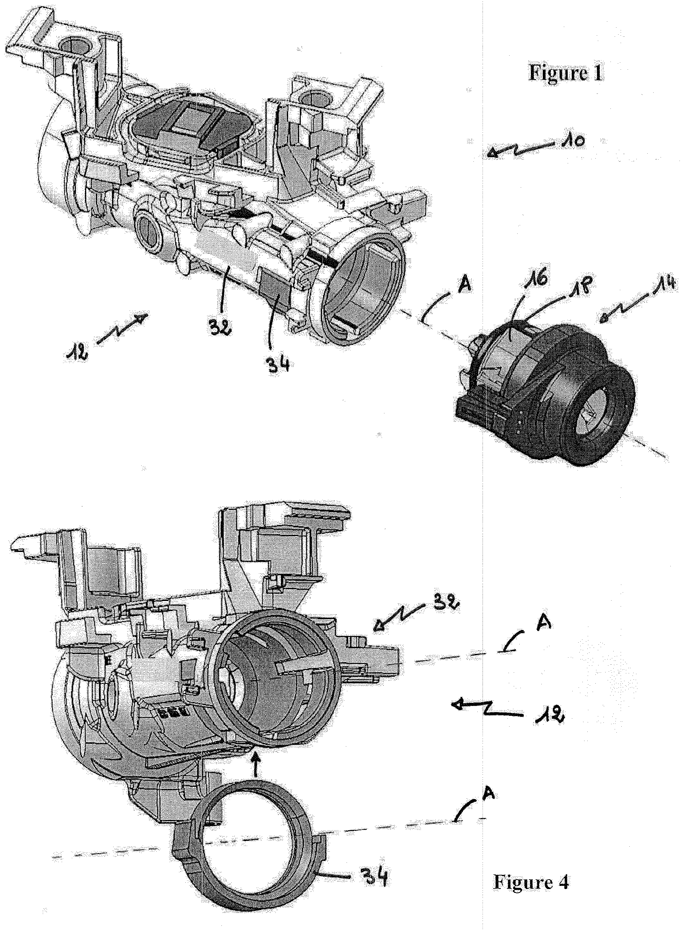

With reference to figure 1, the invention relates to a vehicle antitheft device 10 for a steering column comprising at least a bracket 12 and a lock 14 housed at least partially inside the bracket 12. More particularly, figure 1 illustrates an exploded view of the antitheft device in perspective and as isolated from a vehicle.

Figure 2 illustrates an assembly of the bracket and the lock and more particularly, an extremity of the bracket 12 wherein the lock 14 is inserted.

The lock 14 is intended to cooperate with an authorized key (not illustrated), which, when turned, permits the ignition of the electric power supply to the components of the vehicle, such as the motor, and actuates a locking bolt (not illustrated) to occupy a position to block the steering column of the vehicle, corresponding to the locked position.

When electrical power is supplied to the vehicle, the said locking bolt occupies a position to unblock the steering column of the vehicle, corresponding to the unlocked position.

An "authorized key" is here a key which when the insert of such key is introduced in the lock 14, the said key may be turned without making any effort.

More precisely, the lock 14 comprises a stator and a rotor able to rotate in the stator around an axis of rotation A. The lock 14 further comprises transmission means comprising a cam and an actuating finger configured to cooperate with the locking bolt according to the angular position of the lock.

Furthermore, the lock 14 comprises an axial blocking element 16 protruding radially according to the rotation axis A of the lock 14 from a circumferential face 18 of a case of the lock 14.

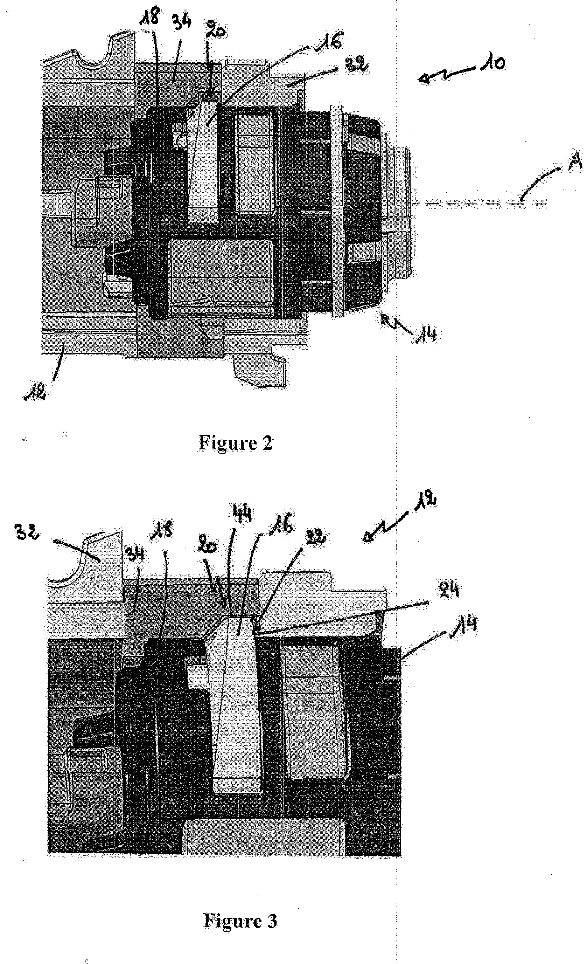

Advantageously, the axial blocking element 16 of the lock is movable with respect of the circumferential face 18 of the case between a retracted position, illustrated on figure 1, wherein the axial blocking element is housed inside the case and an extended position, illustrated on figures 2 and 3, wherein the axial blocking element protruded from the circumferential face 18 of the case.

The axial blocking element 16 is configured to cooperate with the bracket 12. To this end, the bracket 12 comprises a housing 20 configured for receiving the axial blocking element 16 arranged in an inner surface 22 of the bracket as illustrated on figure 2 and the enlarged view on figure 3. More particularly, the housing 20 is configured for enabling the rotation of the axial blocking element 16 according to the rotation axis and for retaining axially along the rotation axis the axial blocking element abuts against a wall 24 of the bracket 12.

According to the invention and with reference to figures 4 to 7, the bracket 12 is made up of at least a body 32 and a sleeve 34 configured to be received at least partially within the body 32. Figure 4 shows an exploded view in perspective of the body 32 and the sleeve 34.

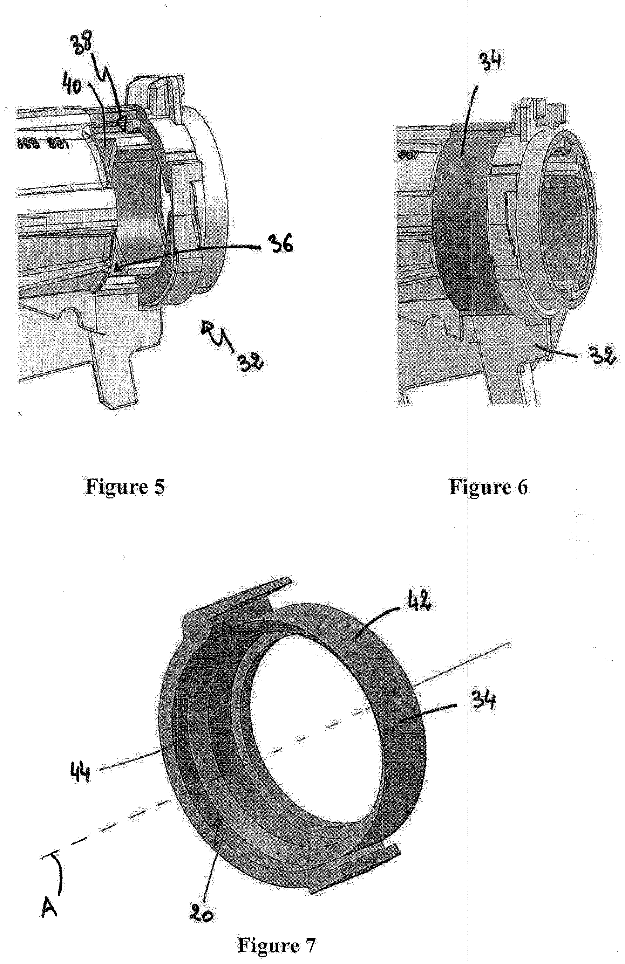

The sleeve 34 is cylindrical-shaped as illustrated on figure 7. Furthermore, the body 32 comprises a cavity 36 and a hole 38 with reference to figure 5 and 6. As is more visible on figures 5 and 6, the cavity 36 opens at a cylindrical inner surface 40 of the body 32 and is configured for receiving at least a portion of an outer surface 42 of the sleeve 34. The hole 38 is configured so that the sleeve 34 is inserted inside the hole 38 to the contact between the outer surface 42 of the sleeve and the bottom of the cavity 36.

According to the invention, the housing 20 intended to receive the axial blocking element 16 is arranged in an inner surface of the sleeve 34. More particularly, the inner surface comprises a portion 44 having a profile complementary to the one of the axial blocking element 16.

## Claims

1. A bracket (12) for a vehicle antitheft device (10) comprising at least a lock (14) intended to be housed at least partially inside the bracket, the bracket (12) comprising a housing (20) configured for receiving an axial blocking element (16) protruding radially according to a rotation axis (A) of the lock from a circumferential face (18) of the lock, the housing (20) being configured for enabling the rotation of the axial blocking element (16) according to the rotation axis and for retaining axially along the rotation axis the axial blocking element abuts against a wall (24) of the housing (20), wherein the bracket (12) is made up of at least a body (32) and a sleeve (34) configured to be received at least partially within the body (32) such that the housing (20) is arranged in an inner surface of the sleeve (34) and wherein the sleeve (34) is cylindrical-shaped and the body (32) comprises:
- a cavity (36) opening at a cylindrical inner surface (40) of the body and configured for receiving at least a portion of an outer surface (42) of the sleeve; and
- a hole (38) configured so that the sleeve (34) is inserted inside the hole to the contact between the outer surface (42) of the sleeve and the bottom of the cavity (36).

2. Bracket according to claim 1, wherein at least one of the body (32) and the sleeve (34) is made of die cast or injected plastics.

3. Bracket according to claim 1 or 2, wherein the sleeve (34) of the bracket is made of die cast or plastic injected including high-strength fibers.

4. Bracket according to any of the preceding claims 1 to 3, wherein the housing (20) is configured such that the lock (14) is rotatable 360° around the rotation axis (A).

5. Bracket according to any of the preceding claims 1 to 4, wherein the body (32) and the sleeve (34) are assembled using welding means, preferably welding means using laser beams, and/or using pining means and/or using crimping means and/or using riveting means.

6. Bracket according to any of the preceding claims 1 to 4, wherein the body (32) and the sleeve (34) are assembled using snap-fastening means.

7. A vehicle antitheft device (10) for a steering column comprising at least:
- a bracket (12) according to any of the preceding claims 1 to 6; and
- a lock (14) housed at least partially inside the bracket (12) and comprising an axial blocking element (16) protruding radially according to a rotation axis (A) of the lock from a circumferential face (18) of a case of the lock and received within the housing (20) arranged in an inner surface of the bracket (12), the axial blocking element (16) being configured to cooperate with the housing (20) such that the axial blocking element is retained axially along the rotation axis in abutment against a wall (24) of the housing (20).

8. A vehicle antitheft device according to claim 7, wherein the axial blocking element (16) of the lock is movable with respect of the circumferential face of the case between a retracted position wherein the axial blocking element is housed inside the case and an extended position wherein the axial blocking element protruded from the face of the case.

9. Method of assembling a bracket (12) for a vehicle antitheft device (10) according to any of the preceding claims 1 to 6, comprising an operating sequence involving:
- a bracket body manufacturing step, wherein the body (32) of the bracket is manufactured,
- a bracket sleeve manufacturing step, wherein the sleeve (34) of the bracket is manufactured, and
- a bracket assembling step, wherein the sleeve (34) is inserted inside the body (32) of the bracket to the contact between the outer surface of the sleeve and a portion of the inner surface of the body.

10. Method of assembling a bracket according to claim 9, further comprising a clipping step wherein the sleeve is clipped onto the outer surface of the body.

11. Method of assembling a vehicle antitheft device (10) for a steering column according to claim 7 or 8, comprising an operating sequence involving:
- a bracket assembling step wherein a method according to claim 9 or 10 is implemented;
- a lock assembling step, wherein the lock comprising at least a rotor and a stator is assembled;
- an insertion step, wherein the lock (14) is inserted inside the bracket (12).

12. Method of assembling a vehicle antitheft device according to claim 11 when depending of claim 8, wherein the axial blocking element (16) is set in the retracted position during the insertion of the lock inside the bracket (12).

## Patentansprüche

1. Halterung (12) für eine Fahrzeugdiebstahlsicherungsvorrichtung (10), mindestens ein Schloss (14) umfassend, das dazu bestimmt ist, mindestens teilweise innerhalb der Halterung untergebracht zu werden, wobei die Halterung (12) ein Gehäuse (20) umfasst, das konfiguriert ist, um ein axiales Blockierelement (16) aufzunehmen, welches radial gemäß einer Rotationsachse (A) des Schlosses aus einer umlaufenden Fläche (18) des Schlosses vorsteht, wobei das Gehäuse (20) konfiguriert ist, um die Rotation des axialen Blockierelements (16) gemäß der Rotationsachse zu ermöglichen, und das axiale Blockierelement axial entlang der Rotationsachse an einer Wand (24) des Gehäuses (20) anstehend zurückzuhalten, wobei sich die Halterung (12) aus mindestens einem Körper (32) und einer Hülse (34) zusammensetzt, die konfiguriert ist, um mindestens teilweise innerhalb des Körpers (32) aufgenommen zu werden, sodass das Gehäuse (20) an einer inneren Oberfläche der Hülse (34) angeordnet ist, und wobei die Hülse (34) zylinderförmig ist und der Körper (32) umfasst:
- einen Hohlraum (36), der sich zu einer zylindrischen inneren Oberfläche (40) des Körpers öffnet, und konfiguriert ist, um mindestens einen Abschnitt einer äußeren Oberfläche (42) der Hülse aufzunehmen; und
- ein Loch (38), das so konfiguriert ist, dass die Hülse (34) innerhalb des Loches auf den Kontakt zwischen der äußeren Oberfläche (42) der Hülse und dem Boden des Hohlraumes (36) eingeführt wird.

2. Halterung nach Anspruch 1, wobei mindestens eines von dem Körper (32) und der Hülse (34) aus einem formgegossenen oder eingespritzten Kunststoff ist.

3. Halterung nach Anspruch 1 oder 2, wobei die Hülse (34) der Halterung aus formgegossenem oder eingespritztem Kunststoff ist, der hochfeste Fasern beinhaltet.

4. Halterung nach einem der vorstehenden Ansprüche 1 bis 3, wobei das Gehäuse (20) so konfiguriert ist, dass das Schloss (14) um 360° um die Rotationsachse (A) herum rotierbar ist.

5. Halterung nach einem der vorstehenden Ansprüche 1 bis 4, wobei der Körper (32) und die Hülse (34) unter Verwendung von Schweißmitteln, vorzugsweise Schweißmittel unter Verwendung von Laserstrahlen, und/oder unter Verwendung von Klemmmitteln und/oder unter Verwendung von Crimpmitteln und/oder unter Verwendung von Nietmitteln zusammengebaut sind.

6. Halterung nach einem der vorstehenden Ansprüche 1 bis 4, wobei der Körper (32) und die Hülse (34) unter Verwendung von Schnappbefestigungsmitteln zusammengebaut sind.

7. Fahrzeugdiebstahlsicherungsvorrichtung (10) für eine Lenksäule, mindestens umfassend:
- eine Halterung (12) nach einem der vorstehenden Ansprüche 1 bis 6; und
- ein Schloss (14), das mindestens teilweise innerhalb der Halterung (12) untergebracht ist und ein axiales Blockierelement (16) umfasst, welches radial gemäß einer Rotationsachse (A) des Schlosses aus einer umlaufenden Fläche (18) eines Faches des Schlosses vorsteht, und innerhalb des Gehäuses (20) aufgenommen ist, das an einer inneren Oberfläche der Halterung (12) angeordnet ist, wobei das axiale Blockierelement (16) konfiguriert ist, um mit dem Gehäuse (20) zusammenzuwirken, sodass das axiale Blockierelement axial entlang der Rotationsachse an einer Wand (24) des Gehäuses (20) anstehend zurückgehalten wird.

8. Fahrzeugdiebstahlsicherungsvorrichtung nach Anspruch 7, wobei das axiale Blockierelement (16) des Schlosses in Bezug auf die umlaufende Fläche des Faches zwischen einer eingezogenen Position, in der das axiale Blockierelement innerhalb des Faches untergebracht ist, und einer ausgefahrenen Position bewegt werden kann, in der das axiale Blockierelement aus der Fläche des Faches vorsteht.

9. Verfahren zum Zusammenbauen einer Halterung (12) für eine Fahrzeugdiebstahlsicherungsvorrichtung (10) nach einem der vorstehenden Ansprüche 1 bis 6, umfassend einen Arbeitsablauf, Folgendes einbeziehend:
- einen Schritt zur Herstellung eines Halterungskörpers, bei dem der Körper (32) der Halterung hergestellt wird,
- einen Schritt zur Herstellung einer Halterungshülse, bei dem die Hülse (34) der Halterung hergestellt wird, und
- einen Schritt zum Zusammenbauen der Halterung, bei dem die Hülse (34) innerhalb des Körpers (32) der Halterung auf den Kontakt zwischen der äußeren Oberfläche der Hülse und einem Abschnitt der inneren Oberfläche des Körpers eingeführt wird.

10. Verfahren zum Zusammenbauen einer Halterung nach Anspruch 9, weiter umfassend einen Klammerungsschritt, bei dem die Hülse an die äußere Oberfläche des Körpers geklammert wird.

11. Verfahren zum Zusammenbauen einer Fahrzeugdiebstahlsicherungsvorrichtung (10) für eine Lenksäule nach Anspruch 7 oder 8, umfassend einen Arbeitsablauf, Folgendes einbeziehend:
- einen Schritt zum Zusammenbauen der Halterung, bei dem ein Verfahren nach Anspruch 9 oder 10 angewendet wird;
- einen Schritt zum Zusammenbauen des Schlosses, bei dem das Schloss, welches mindestens einen Rotor und einen Stator umfasst, zusammengebaut wird;
- einen Schritt zum Einführen, bei dem das Schloss (14) innerhalb der Halterung (12) eingeführt wird.

12. Verfahren zum Zusammenbauen einer Fahrzeugdiebstahlsicherungsvorrichtung nach Anspruch 11, wenn von Anspruch 8 abhängig, wobei das axiale Blockierelement (16) während der Einführung des Schlosses innerhalb der Halterung (12) in die eingezogene Position gesetzt wird.

## Revendications

1. Support (12) pour un dispositif antivol pour véhicule (10) comprenant au moins un verrou (14) destiné à être logé au moins partiellement à l'intérieur du support, le support (12) comprenant un boîtier (20) configuré pour recevoir un élément de blocage axial (16) faisant saillie radialement selon un axe de rotation (A) du verrou à partir d'une face circonférentielle (18) du verrou, le boîtier (20) étant configuré pour permettre la rotation de l'élément de blocage axial (16) selon l'axe de rotation et pour maintenir axialement le long de l'axe de rotation l'élément de blocage axial en butée contre une paroi (24) du boîtier (20), où le support (12) étant constitué d'au moins un corps (32) et un manchon (34) configuré pour être reçu au moins partiellement dans le corps (32) de sorte que le boîtier (20) soit agencé dans une surface interne du manchon (34) et où le manchon (34) est de forme cylindrique et le corps (32) comprend :
- une cavité (36) s'ouvrant sur une surface interne cylindrique (40) du corps et configurée pour recevoir au moins une partie d'une surface externe (42) du manchon ; et
- un trou (38) configuré de sorte que le manchon (34) soit inséré à l'intérieur du trou jusqu'au contact entre la surface externe (42) du manchon et le fond de la cavité (36).

2. Support selon la revendication 1, dans lequel au moins l'un du corps (32) et du manchon (34) est réalisé en matières plastiques moulées sous pression ou injectées.

3. Support selon la revendication 1 ou 2, dans lequel le manchon (34) du support est réalisé en matière plastique moulée sous pression ou injectée comportant des fibres haute résistance.

4. Support selon l'une des revendications précédentes 1 à 3, dans lequel le boîtier (20) est configuré de sorte que le verrou (14) puisse tourner à 360° autour de l'axe de rotation (A).

5. Support selon l'une des revendications précédentes 1 à 4, dans lequel le corps (32) et le manchon (34) sont assemblés en utilisant un moyen de soudage, de préférence un moyen de soudage utilisant des faisceaux laser, et/ou en utilisant un moyen d'ancrage et/ou en utilisant un moyen de sertissage et/ou en utilisant un moyen de rivetage.

6. Support selon l'une des revendications précédentes 1 à 4, dans lequel le corps (32) et le manchon (34) sont assemblés en utilisant un moyen d'encliquetage.

7. Dispositif antivol pour véhicule (10) pour une colonne de direction comprenant au moins :
- un support (12) selon l'une des revendications précédentes 1 à 6 ; et
- un verrou (14) logé au moins partiellement à l'intérieur du support (12) et comprenant un élément de blocage axial (16) faisant saillie radialement selon un axe de rotation (A) du verrou à partir d'une face circonférentielle (18) d'un palastre du verrou et reçu dans le boîtier (20) agencé dans une surface interne du support (12), l'élément de blocage axial (16) étant configuré pour coopérer avec le boîtier (20) de sorte que l'élément de blocage axial soit maintenu axialement le long de l'axe de rotation en butée contre une paroi (24) du boîtier (20).

8. Dispositif antivol pour véhicule selon la revendication 7, dans lequel l'élément de blocage axial (16) du verrou est mobile par rapport à la face circonférentielle du palastre entre une position rétractée dans laquelle l'élément de blocage axial est logé à l'intérieur du palastre et une position étendue dans laquelle l'élément de blocage axial fait saillie à partir de la face du palastre.

9. Procédé d'assemblage d'un support (12) pour un dispositif antivol pour véhicule (10) selon l'une des revendications précédentes 1 à 6, comprenant une séquence de fonctionnement impliquant :
- une étape de fabrication de corps de support, dans laquelle le corps (32) du support est fabriqué,
- une étape de fabrication de manchon de support, dans laquelle le manchon (34) du support est fabriqué, et
- une étape d'assemblage de support, dans laquelle le manchon (34) est inséré à l'intérieur du corps (32) du support jusqu'au contact entre la surface externe du manchon et une partie de la surface interne du corps.

10. Procédé d'assemblage d'un support selon la revendication 9, comprenant en outre une étape de clipsage dans laquelle le manchon est clipsé sur la surface externe du corps.

11. Procédé d'assemblage d'un dispositif antivol pour véhicule (10) pour une colonne de direction selon la revendication 7 ou 8, comprenant une séquence de fonctionnement impliquant :
- une étape d'assemblage de support dans laquelle un procédé selon la revendication 9 ou 10 est mis en oeuvre ;
- une étape d'assemblage de verrou, dans laquelle le verrou comprenant au moins un rotor et un stator est assemblé ;
- une étape d'insertion, dans laquelle le verrou (14) est inséré à l'intérieur du support (12).

12. Procédé d'assemblage d'un dispositif antivol pour véhicule selon la revendication 11 lorsqu'elle dépend de la revendication 8, dans lequel l'élément de blocage axial (16) est mis dans la position rétractée pendant l'insertion du verrou à l'intérieur du support (12).
